Europäisches Patentamt

European Patent Office

Office européen des brevets

(11) Publication number: **0 464 270 A1**

## EUROPEAN PATENT APPLICATION

(21) Application number: **90201792.0**

(22) Date of filing: **04.07.90**

(51) Int. Cl.5: **G03C 11/02, B23K 26/18, B41M 5/24, G03C 5/14**

(43) Date of publication of application:
**08.01.92 Bulletin 92/02**

(84) Designated Contracting States:
**AT BE CH DE DK ES FR GB GR IT LI LU NL SE**

(71) Applicant: **METATECHNICS**
**Leeghwaterstraat 5**
**NL-2521 CM Den Haag(NL)**

(72) Inventor: **Robert, François Willy**
**Waldorpstraat 14**
**NL-2521 CB Den Haag(NL)**

(74) Representative: **Land, Addick Adrianus**
**Gosling et al**
**OCTROOIBUREAU ARNOLD & SIEDSMA**
**Sweelinckplein 1**
**NL-2517 GK Den Haag(NL)**

(54) **Method for writing characters onto a tape or plate and system for implementation thereof.**

(57) The method and system use laser radiation for writing characters onto a protective layer of a film tape or other radiation sensitive tape or plate.

FIG. 2

Rank Xerox (UK) Business Services

The present invention relates to a method for writing characters on a tape or plate provided with radiation-sensitive portions wherein the characters are written thereon by means of laser radiation. This known method relates for instance to subtitling films or for writing on screen or grid rolls for the printing industry, wherein plates are arranged around rolls. Such a method is known from the European patent application EP-A-201391.

It is an object of the present invention to improve this known method and in simple manner to write characters with a constant quality onto a tape or a plate.

This object is achieved in that after developing the radiation-sensitive portions of the tape a protective layer is applied at least over the parts of the tape to be written on, the characters to be arranged are written onto the protective layer using a laser beam, and the material of the radiation-sensitive portions under the parts of the protective layer written on is removed.

The characters to be arranged are written into the protective or varnish layer which is applied over the developed parts of the tape or plate. As the protective layer has a more or less constant thickness or composition, characters can be written in the varnish layer in accurate manner at a constant power of the laser bundle.

Subtitling of feature films is carried out according to known techniques by means of contact prints from printing blocks on the emulsion of the developed portions of the film. This known art uses a great deal of printing block material and is time consuming. The printing blocks are usually of zinc, which is harmful to the environment.

The present invention will be further elucidated with reference on the basis of a description of an embodiment referring to the annexed drawing, in which:

Fig. 1. shows a schematic cross-sectional view of a film tape on which the method according to the present invention is being carried out;

Fig. 2. shows on a smaller scale a system for implementing the method of fig. 1; and

Fig. 3. shows detail III from fig. 2.

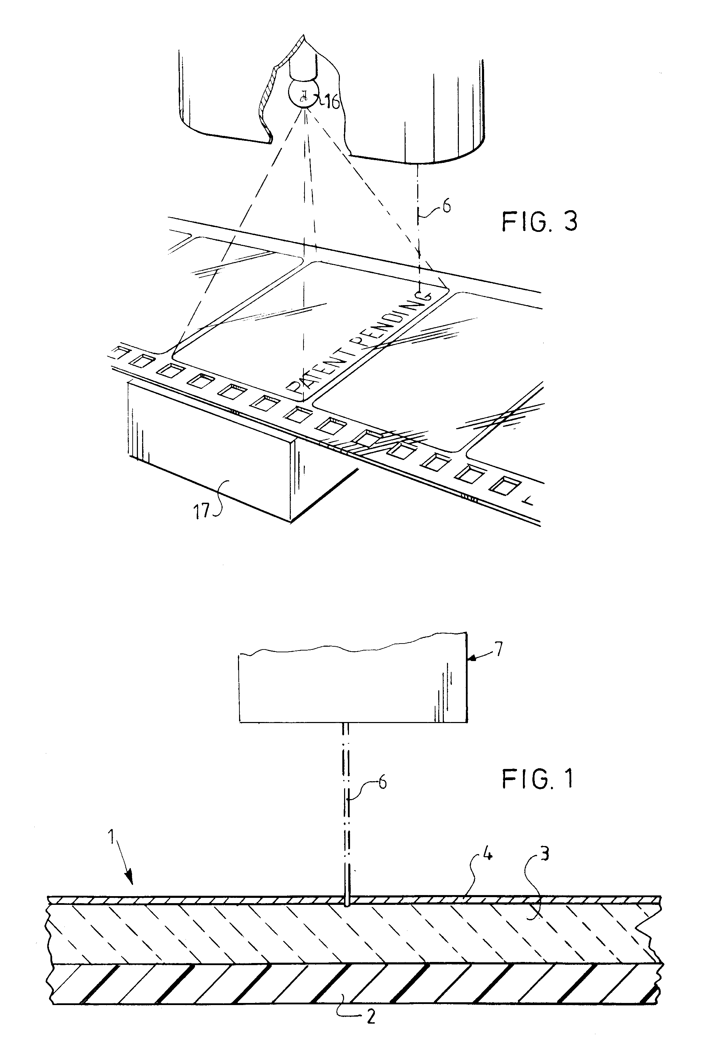

A film tape 1 (fig. 1) - for example 8, 16 or 35 mm wide - comprises a carrier 2, typically of cellulose acetate, an emulsion layer 3 applied thereto onto which images for projection in a film projector are arranged by development in known manner, and a protective or varnish layer 4 which is applied over the emulsion layer in order to protect it.

A laser beam 6 from a laser (not shown) is sent via a galvanometer 7 to the varnish layer 4, in order to arrange desired characters thereon. Such a galvanometer comprises a mirror magnetically controllable by means of electric currents. Such a galvanometer is commercially available.

After marking of the characters in or through the varnish layer 4, the emulsion layer revealed beneath can be etched in per se known manner. Hereafter the etched away portions can again be provided with a protective layer. A commercially available laser has been found to comply with the requirements with respect to intensity distribution over the diameter of the laser beam, and also with respect to the tolerances in total intensity required for the laser beam.

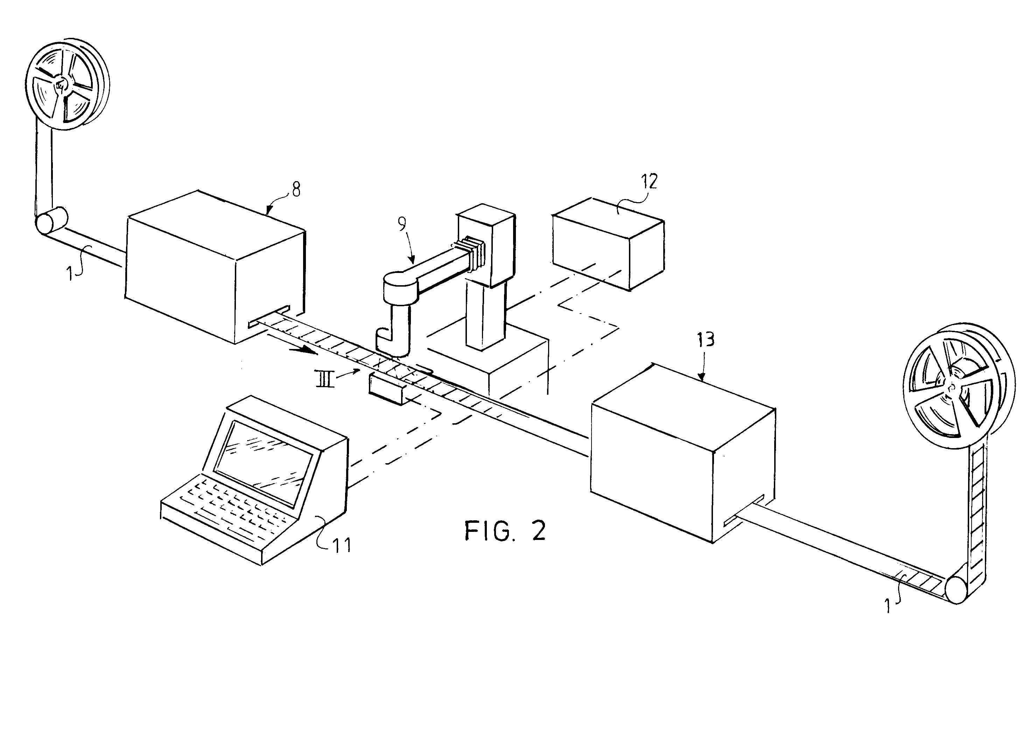

In a continuous process (fig. 2) a film tape 1 is guided through a varnishing station 8 and then under a writing apparatus 9 in which are arranged a galvanometer and a laser. Via a peripheral device or computer 11 the characters or subtitle text can be entered via a processing means 12 to the writing device 9.

After the characters have been arranged in the varnish layer, the film is then guided through an etching station 13 and through a subsequent second varnish station 14.

It can be seen in more detail (fig. 3) that the writing device 9 can be provided with a control device, consisting for instance of a light source 16 and a light pick-up device 17 for checking the text written by the laser beam 6.

The writing of characters and the etching can of course also be performed for each complete film tape. In this case the method is also considerably quicker than previously known methods.

This method is applied for example in arranging an optical soundtrack on a film tape.

**Claims**

1. Method for writing characters on a tape or plate provided with radiation-sensitive portions, wherein the characters are written thereon by means of laser radiation, **characterized in that** after developing radiation-sensitive portions of the tape a protective layer is applied over at least the portions of the tape to be written on, the characters to be arranged are written onto the protective layer using the laser beam, and that the material of the radiation-sensitive portions under the parts of the protective layer that has been written on are removed.

2. Method as claimed in claim 1, **characterized in that** thereafter a protective layer is applied over the removed portions.

3. System for writing characters on a tape provided with radiation-sensitive portions, comprising a laser and means for controlling the laser beam for writing characters, **character-**

**ized by** means for applying a protective layer or varnish on the portions of the tape to be written on.

4. System as claimed in claim 3, **characterized in that** the means for controlling the laser beam comprise a galvanometer which is coupled to a station for defining the characters.

5. System as claimed in claim 3 or 4, **characterized by** a device for checking the written characters.

FIG. 3

PATENT PENDING

FIG. 1

FIG. 2

EP 0 464 270 A1

# EUROPEAN SEARCH REPORT

**EP 90 20 1792**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 036 369 (ORNSBY COMPANY) <br> * the whole document * <br> – – – | 1,4,5 | G 03 C 11/02 <br> B 23 K 26/18 <br> B 41 M 5/24 |
| Y | FR-A-1 110 085 (AKTIEBOLAGET FILMKOPIA) <br> * the whole document * <br> – – – | 1-3 | G 03 C 5/14 |
| Y | EP-A-0 176 684 (IBM) <br> * page 4, lines 8 - 27; figures 1-3 * <br> – – – | 1-3 | |
| Y | DE-A-3 545 144 (E.J JOHNSDORF ET AL.) <br> * column 4, line 48 - column 5, line 2; claim 4 * <br> – – – | 1,4,5 | |
| Y | FR-A-2 161 249 (J.DAENS) <br> * claims * <br> – – – | 2 | |
| Y | PATENT ABSTRACTS OF JAPAN vol. 12, no. 123 (P-690)(2970) 16 April 1988, <br> & JP-A-62 247370 (ONDA SHOJI) 28 October 1987, <br> * the whole document * <br> – – – – – | 2 | |

|  |
|---|
| TECHNICAL FIELDS SEARCHED (Int. Cl.5) |
| G 03 C |

**The present search report has been drawn up for all claims**

| Place of search | Date of completion of search | Examiner |
|---|---|---|
| The Hague | 05 March 91 | PHILOSOPH L.P. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document